# EUROPÄISCHE PATENTSCHRIFT

(11) **EP 0 727 386 B1**
(45) Veröffentlichungstag und Bekanntmachung des Hinweises auf die Patenterteilung: **05.04.2000**
(21) Anmeldenummer: 96100299.5
(22) Anmeldetag: 11.01.1996
(51) Int. Cl.: B66F 7/22, B60P 1/46

(54) **Hilfsvorrichtung zum Abladen insbesondere von Getränkekisten von Fahrzeugen oder Rampen**
Auxiliary device for the unloading, in particular of beverage crates from vehicles or ramps
Dispositif d'assistance pour le déchargement, en particulier des caisses de boissons de véhicules ou de rampes

(30) Priorität: 17.02.1995 DE 29502607 U
(43) Veröffentlichungstag der Anmeldung: 21.08.1996
(73) Patentinhaber: Unsinn, Josef, 86684 Holzheim (DE)
(72) Erfinder: Unsinn, Josef, 86684 Holzheim (DE)
(74) Vertreter: Gallo, Wolfgang, Dipl.-Ing. (FH)

(56) Entgegenhaltungen:
- DE-A- 1 945 062
- DE-A- 2 208 242
- DE-A- 2 328 440
- DE-B- 1 250 748
- DE-B- 1 950 652
- PATENT ABSTRACTS OF JAPAN vol. 011, no. 166 (M-593), 28.Mai 1987 & JP 61 295146 A (ISUZU MOTORS LTD;OTHERS: 01), 25.Dezember 1986,

## Beschreibung

Die Erfindung betrifft ein Hilfsgerät zum Abladen von Getränkekisten oder anderen Stückgütern von Fahrzeugen, Rampen oder dgl.

Zweck der Erfindung ist es insbesondere, den Lieferfahrern bei der Auslieferung von Getränken das Abladen voller Getränkekisten von der Ladefläche des Lieferfahrzeugs an einer Mehrzahl von Entladestellen zu erleichtern, aber die Erfindung ist in gleicher Weise auch zum Abladen anderer stückiger Güter von der Ladefläche eines Fahrzeugs einsetzbar, beispielsweise bei der Auslieferung von Paketen.

Bei der Auslieferung stellt das Beladen der Lieferfahrzeuge kein Problem dar, denn in den Brauereien bzw. Getränkedepots stehen Gabelstapler zum palettenweisen oder stapelweisen Aufladen der vollen Getränkekisten zur Verfügung. Hingegen stehen die Lieferfahrer an den Entladestellen, z.B. bei Privathaushalten, ohne jede Hilfe da und müssen die bis zu 5 oder 6 Lagen hoch auf dem Fahrzeug gestapelten vollen Getränkekisten von Hand herunterheben und abladen. Dies ist, insbesondere bei noch ziemlich voll beladenem Fahrzeug, häufig schwierig und auch nicht ungefährlich, da auf der Ladefläche oft viele verschiedene Bier- oder Getränkesorten nebeneinander gestapelt sind und der Fahrer genötigt ist, von irgendeiner Stelle längs einer Seite der Ladefläche eine Getränkekiste einhändig herunterzuwuchten, weil er sich mit der anderen Hand selbst festhalten muß.

Aufgabe der Erfindung ist es daher, eine Hilfsvorrichtung zu schaffen, die das leichtere Herunterheben von Getränkekistenstapeln an irgendeiner beliebigen Stelle außen an der Ladefläche oder an Laderampen zu ermöglichen.

Diese Aufgabe wird gemäß der Erfindung mit einem llilfsgerät gelöst, wie es in den anliegenden Schutzansprüchen angegeben ist.

Nach den Schutzansprüchen umfaßt die Erfindung also drei Lösungsvarianten, die alle auf dem gleichen Erfindungsprinzip beruhen, nämlich ein transportables, nämlich tragbares oder insbesondere rollbares Gerät zum bedarfsweisen Ansetzen an der heruntergeklappten Bordwand an der gewünschten Stelle der Ladefläche des Fahrzeugs, ein am Fahrzeug bzw. dessen herunterklappbarer Bordwand installiertes und nach Bedarf längs einer dort angeordneten Führung entlang der Ladeflächenseite an die jeweils gewünschte Arbeitsposition verfahrbares Gerät, und schließlich ein mit einer Transportkarre kombiniertes Gerät.

Die erfindungsgemäße Hilfsvorrichtung dient zwar insbesondere zum Abladen voller Getränkekisten oder dgl. von einem Fahrzeug, ist aber ebenso zum Aufladen leerer Getränkekisten auf das Fahrzeug und in feststehenden Laderampen hilfreich.

Vorzugsweise arbeitet die erfindungsgemäße Hilfsvorrichtung mit einem Federspeicher, bei welchem das Absenken der entsprechend schweren vollen Getränkekisten oder dgl. aufgrund von deren größerem Gewicht unter Zusammendrücken des Federspeichers erfolgt, und bei welchem das Anheben von Leergut-Getränkekisten aufgrund von deren geringerem Gewicht durch die dafür ausreichende gespeicherte Energie beim Entspannen des Federspeichers erfolgen kann. Selbstverständlich sind aber auch motorisch angetriebene Versionen der erfindungsgemäßen Hilfsvorrichtung möglich.

Ausführungsbeispiele der drei grundsätzlichen Ausführungsvarianten der Erfindung sind in den anliegenden Zeichnungen schematisch dargestellt und werden im folgenden kurz erläutert. In den Zeichnungen zeigt:
- Fig. 1: ein von Hand transportables Hilfsgerät nach der Erfindung,
- Fig. 2: ein in einen Fahrzeugaufbau integriertes Hilfsgerät nach der Erfindung,
- Fig. 3: ein in eine Transportkarre integriertes Hilfsgerät nach der Erfindung, und
- Fig. 4: ein schematisches Funktionsschema eines Hilfsgeräts nach der Erfindung.

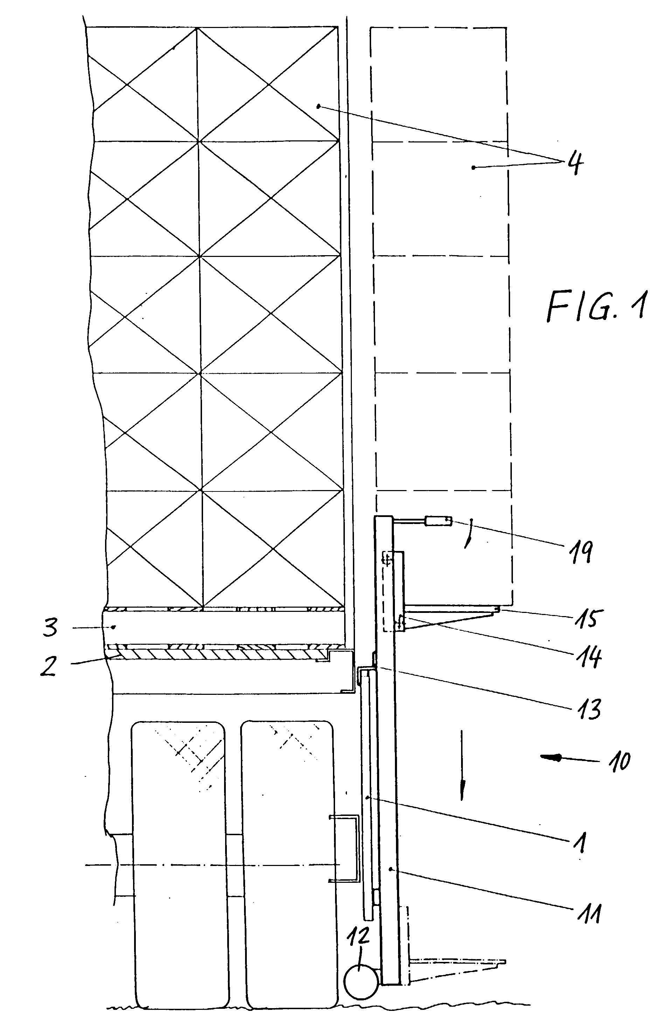

Fig. 1 zeigt ein manuell transportables Hilfsgerät 10 nach der Erfindung in Betriebsstellung an der heruntergeklappten seitlichen Bordwand 1 eines Lastwagens, auf dessen Ladefläche 2 Paletten 3 mit Getränkekisten 4 geladen sind.

Das llilfsgerät 10 weist ein Gestell 11 auf, das vorzugsweise unten mit Rollen 12 zum leichteren Transport versehen ist.

An dem Gestell 11 ist ein Einhängeelement 13 zum Einhängen des Gestells am obenliegenden Rand der heruntergeklappten Bordwand 1 vorgesehen, das als starrer Einhängewinkel, als federnd abwärts vorgespannter und über einen gewissen Bereich vertikal verschiebbarer Winkel oder in anderer zweckmäßiger Weise ausgebildet sein kann und vorzugsweise paarweise angeordnet ist, um eine sichere Position des Gestells 11 an der heruntergeklappten Bordwand 1 zu gewährleisten.

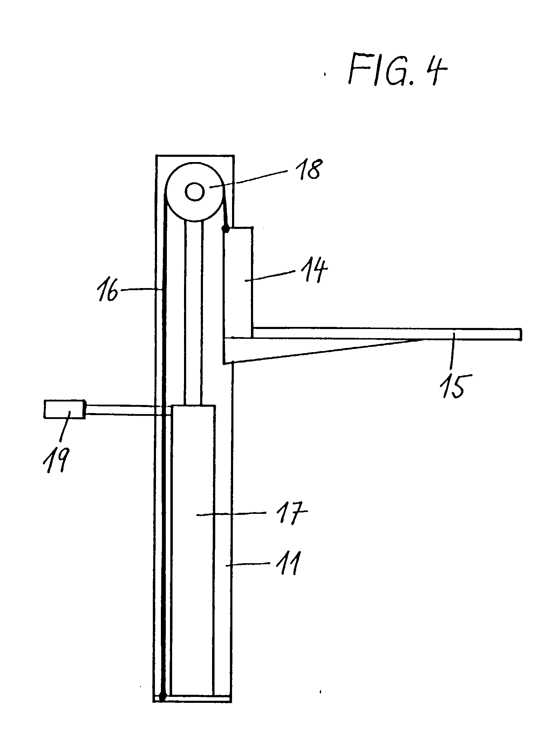

Weiter ist an dem Gestell 11 ein Schlitten 14 mit daran angeordneter Hubplattform 15 vertikal verschieblich geführt. Der Schlitten ist über einen Seil- oder Kettenzug 16 mit einem Federspeicher 17 (siehe schematische Darstellung nach Fig. 4) verbunden, und zwar vorzugsweise über einen flaschenzugartigen Übersetzungsmechanismus 18. Ein Brems- oder Sperrorgan (nicht dargestellt), das auf irgendein Element der beweglichen Anordnung wirken kann, nämlich den Seil- oder Kettenzug, den Federspeicher, den flaschenzugartigen Mechanismus oder auf den Schlitten 14, arretiert den Schlitten 14 in seiner jeweiligen Position und ist mittels eines Handhebels 19 lösbar.

Im Gebrauch befindet sich der Schlitten 14 mit der Plattform 15 in seiner Ruhestellung in der obersten Position, die zweckmäßigerweise mit Hilfe eines veränderbaren Anschlags einstellbar ist und der Höhenposition der Palette 3 bzw., wenn keine Paletten verwendet werden, der Ladefläche 2 entspricht. Ein Kistenstapel kann nun, wie gestrichelt angedeutet ist, von der Ladefläche bzw. einer Palette auf die Plattform 15 herübergezogen werden. Danach wird durch Betätigung des Handhebels 19 die Schlittenarretierung gelöst und der Schlitten senkt sich unter dem Gewicht der vollen Kisten auf der Plattform, das größer ist als die Federkraft des Federspeichers auf den Schlitten, in durch die Konstruktion entsprechend vorgegebener gebremster Weise ab bis in eine unterste Position, wo der Kistenstapel auf eine Transportkarre oder dgl. herübergezogen und weitertransportiert werden kann. Durch Loslassen des Handhebels 19 erfolgt wiederum die Arretierung des Schlittens, so daß dieser in seiner unteren Position stehen bleibt. Ein zurückgebrachter leerer Kistenstapel, der beträchtlich leichter als ein voller Kistenstapel ist, kann dann auf die Plattform 15 aufgestellt werden, und bei Betätigung des Handhebels 19 und entsprechendem Entriegeln des Schlittens drückt die nun überwiegende Kraft des Federspeichers die Plattform nach oben bis in die oberste Position, wo der Kistenstapel bequem auf die Palette bzw. Ladefläche geschoben werden kann.

Der Federspeicher 17 kann als Gasfeder ausgebildet sein, aber ebenso auch als rein mechanische Feder in Form einer Schraubenfeder bzw. einer aus mehreren Schraubenfedern gebildeten Federanordnung.

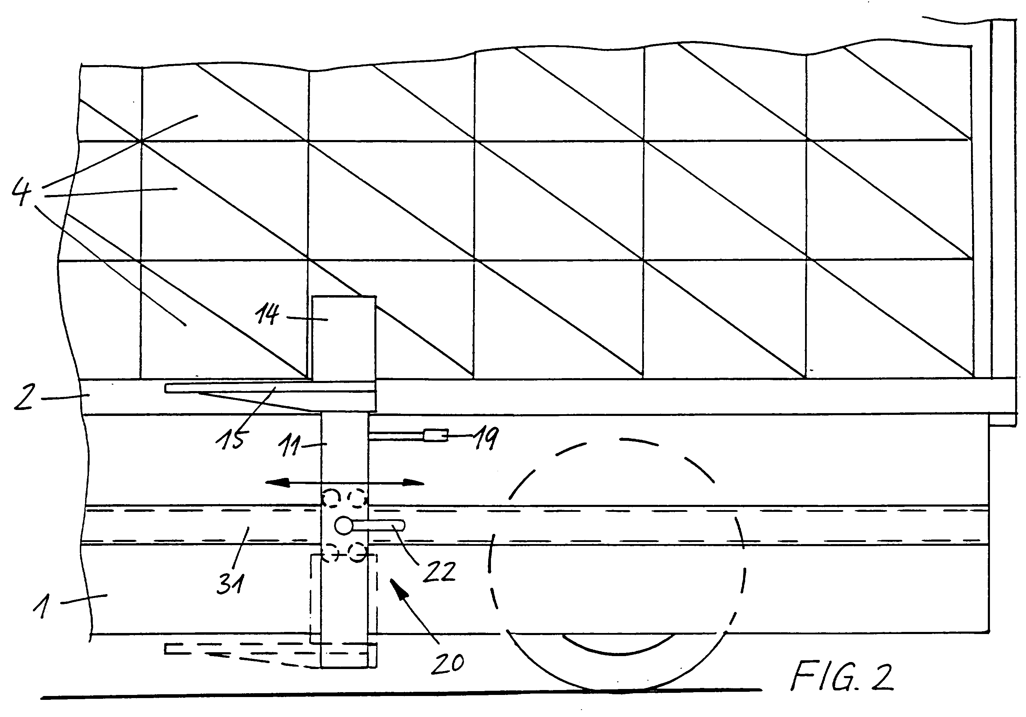

Fig. 2 zeigt ein Gerät 20, das ähnlich dem Gerät 10 nach Fig. 1 ausgebildet ist, wobei aber der wesentliche Unterschied darin besteht, daß, während das Gerät 10 nach Fig. 1 als gesondertes, manuell zu handhabendes Gerät ausgebildet ist, das Gerät 20 nach Fig. 2 fest auf einer Längsführung 31 der Bordwand 1 montiert und entlang dieser verfahrbar ist.

Dieses Gerät verbleibt also fest am Fahrzeug, so daß der Fahrer lediglich die Bordwand herunterzuklappen und das Gerät 20 in die gewünschte Position entlang der Ladeflächenlänge zu verfahren braucht und dort mittels eines Arretierorgans 22, das in zweckmäßigerweise ausgebildet ist, an der gewünschten Position arretiert, also gegen seitliche Verschiebung im Betrieb sichert.

Es versteht sich von selbst, daß die Anbringung und konstruktive Ausbildung im einzelnen so erfolgen muß, daß, jedenfalls an einer vorgegebenen Stauposition des Geräts 20, das Hochklappen der Bordwand ohne Kollision mit der Ladefläche möglich ist. Dazu bieten sich, ohne daß das im einzelnen dargestellt ist, mehrere Möglichkeiten an. Zum einen kann das Gerät 20 (weil die Plattform 15 des Schlittens im Betrieb eine mit der Ladefläche bzw. Palettenoberkante bündige Stellung erreichen muß, andererseits aber möglichst bis auf den Boden absenkbar sein muß) so ausgebildet sein, daß das Gestell bei heruntergeklappter Bordwand nach oben über die dann obenliegende Bordwandunterkante übersteht, wobei dann an der vorgesehenen Stauposition des Geräts eine entsprechende Aussparung in der Ladefläche vorgesehen ist, die das Hochkippen der Bordwand ermöglicht. Es ist aber auch möglich, das Gerät 20 an einem längs der heruntergeklappten Bordwand längsverfahrbaren Schlitten zu montieren, an welchem das Gerät in eine parallel zur Bordwand verlaufende Transportstellung schwenkbar ist, so daß ein Hochklappen der Bordwand mit dem Gerät im Prinzip in jeder Position des Geräts längs der Bordwand möglich ist. Selbstverständlich kann die Hubplattform 15 am Schlitten 14 hochklappbar ausgebildet sein, um die Sperrigkeit des Geräts in der Stauposition zu verringern.

Außerdem ist es natürlich möglich, die Bordwand nicht klappbar, sondern vertikal verschieblich absenkbar auszubilden und das Gerät 20 außen an der Bordwand anzuordnen, so daß das Problem eines oberen oder unteren Überstands und im Zusammenhang damit einer Kollision mit der Ladefläche nicht auftritt. Dabei kann die Bordwand umlaufend an allen drei Seiten (beide Seiten und Rückseite) zusammenhängend und gemeinschaftlich absenkbar (z.B. hydraulisch) ausgebildet werden, und die Führungen zum Verfahren des Geräts 20 können an diesen drei Seiten kontinuierlich umlaufend vorgesehen sein, so daß das Gerät 20 nach Bedarf an eine beliebige Stelle der drei Ladeflächenseiten verfahren werden kann. Zweckmäßig ist dann gleich auch noch eine Verfahrbarkeit in eine Stauposition, beispielsweise zwischen Ladefläche und Fahrerhaus, vorgesehen, um während der Fahrt einen gefährlichen Überstand des Geräts über die Außenkontur des Fahrzeugs im übrigen zu vermeiden.

Diese Möglichkeiten sind für den Fachmann leicht einsichtig und brauchen daher nicht im einzelnen zeichnerisch dargestellt zu werden.

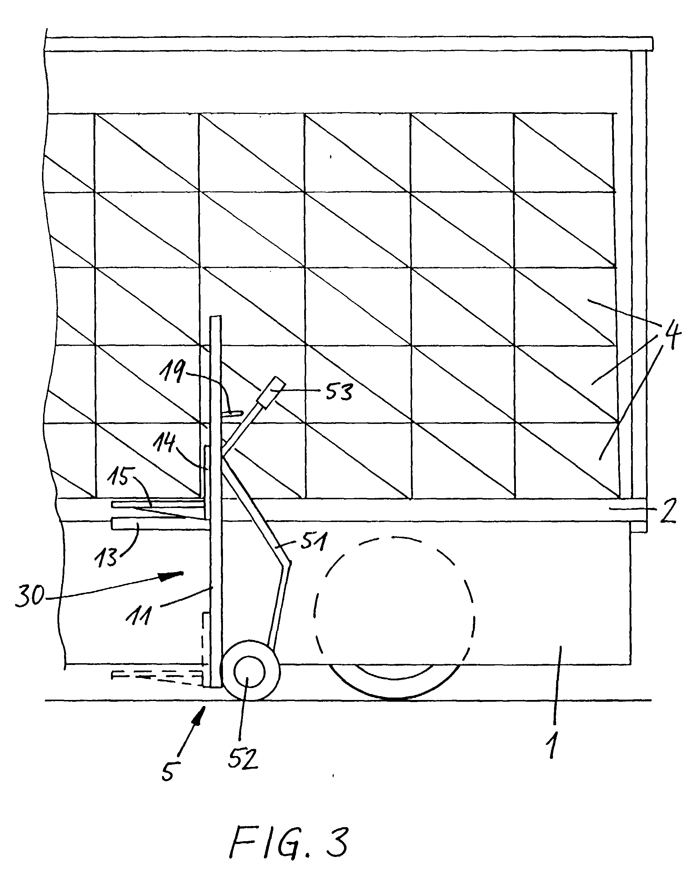

Fig. 3 zeigt eine weitere Variante, bei welcher ein Gerät 30 nach der Erfindung in eine Transportkarre 5 integriert ist. Die Karre 5 hat ein übliches Gestell 51 mit Rädern 52 und Handgriffen 53, und in das Gestell der Karre ist das Gerät 30 integriert, dessen Hubplattform 15 die Ladeschaufel der Transportkarre bildet, wenn sie sich in der abgesenkten Position befindet.

Vorstehend wurde das erfindungsgemäße Hilfsgerät im Zusammenhang mit einem Fahrzeug beschrieben. Es kann aber auch, wie einleitend schon erwähnt, in gleicher Weise für das Aufladen oder Abladen bzw. das Herauf- oder Herunterheben von Lasten an feststehenden Laderampen von Gebäude oder irgendwelchen Einrichtungen Anwendung finden. Auch dort kann das Hilfsgerät entweder an dem gewünschten Ort einhängbar sein oder längs einer Laderampe verfahrbar sein. Diese analoge Anwendung ist für ein Fachmann aus der vorstehenden Beschreibung des Einsatzes bei Fahrzeugen ohne weiteres einsichtig und braucht nicht besonders beschrieben und dargestellt zu werden.

## Patentansprüche

1. Hilfsgerät zum Abladen stückiger Güter wie Getränkekisten oder dgl. von Fahrzeugen oder an Laderampen, bestehend aus einem Gestell (11) mit Mitteln (13) zum Einhängen bzw. Arretieren des Gestells an einer heruntergeklappten Fahrzeugbordwand oder Fahrzeugladeflächenkante oder einer Laderampe, einem an dem Gestell vertikal verschiebbar geführten Schlitten (14) mit einer daran angeordneten Hubplattform (15), weiter mit einem im Gestell angeordneten Federwerk (17), das den Schlitten (14) nach oben drängt, und mit einem Mechanismus (19) zum lösbaren Arretieren der Schlittenbewegung.

2. Hilfsgerät nach Anspruch 1, dadurch gekennzeichnet, daß das Gestell (11) mit Rollen (12) zum Verfahren versehen ist.

3. Hilfsgerät zum Abladen stückiger Güter wie Getränkekisten oder dgl. von Fahrzeugen oder Laderampe, mit einem am Fahrzeugaufbau längs mindestens einer Ladeflächenseite bzw. längs der Laderampe verfahrbar montiertem Gestell (11), an welchem ein Schlitten (14) mit einer Hubplattform (15) vertikal verschiebbar geführt ist, weiter mit einem im Gestell angeordneten Federwerk (17), welches den Schlitten nach oben spannt, und mit einem Mechanismus (19) zum wahlweise lösbaren Arretieren der Schlittenbewegung.

4. Hilfsgerät nach Anspruch 3, dadurch gekennzeichnet, daß das Gestell (11) an der Innenseite einer heruntergeklappten Bordwand längsverfahrbar montiert ist.

5. Hilfsgerät nach Anspruch 4, dadurch gekennzeichnet, daß das Gestell über einen längs der Bordwand verfahrbaren Schlitten montiert und in eine zur Bordwand parallel liegende Transportstellung schwenkbar ist.

6. Hilfsgerät nach Anspruch 3, dadurch gekennzeichnet, daß das Gestell an der Außenseite einer durch vertikales Verschieben in eine geöffnete Position absenkbaren Bordwand verfahrbar angeordnet ist.

7. Hilfsgerät nach Anspruch 6, dadurch gekennzeichnet, daß das Gestell längs einer um mindestens eine Ladeflächenlängsseite und die Ladenflächenrückseite verlaufende Führung einer zusammenhängenden und gemeinsam absenkbaren Bordwand verfahrbar ist.

8. Hilfsgerät zum Abladen von stückigen Gütern wie Getränkekisten oder dergleichen von Fahrzeugen, mit einem mit einem Transportrollerfahrwerk (52) kombinierten Gestell (11) mit einem Organ (13) zum Einhängen bzw. Arretieren an einer heruntergeklappten Bordwand (1) oder an einer Ladeflächenkante des Fahrzeugs, weiter mit einem an dem Gestell vertikal verschiebbar geführten Schlitten (14) mit einer Hubplattform (15), welche zugleich die Ladeschaufel der Transportkarre bildet, ferner mit einem in dem Gestell angeordneten Federwerk (17), welches den Schlitten (14) nach oben drängt, und mit einem Mechanismus (19) zu wahlweise lösbaren Arretieren der Schlittenbewegung.

9. Hilfsgerät nach einem der Ansprüche 1 bis 8, dadurch gekennzeichnet, daß das Federwerk eine Gasfeder aufweist und der Arretiermechnismus auf ein Bauteil der Gasfeder wirkt.

10. Hilfsgerät nach einem der Ansprüche 1 bis 9, dadurch gekennzeichnet, daß der Schlitten (14) über einen Seil- oder Kettenzug (16) und einen flaschenzugartigen Übersetzungsmechanismus (18) mit dem Federwerk (17) verbunden ist.

11. Hilfsgerät nach einem der Ansprüche 1 bis 10, dadurch gekennzeichnet, daß der Arretiermechanismus mittels eines Hand- oder Fußhebels (19) im Sinne eines Lösens der Schlittenarretierung betätigbar ist.

12. Hilfsgerät nach einem der Ansprüche 1 bis 11, dadurch gekennzeichnet, daß die Plattform (15) klappbar am Schlitten (14) angeordnet ist.

13. Hilfsgerät nach einem der Ansprüche 1 bis 12, dadurch gekennzeichnet, daß im Gestell zusätzlich zum Federwerk oder and dessen Stelle ein motorischer Hubantrieb für die Schlittenverschiebung angeordnet ist.

14. Hilfsgerät nach Anspruch 13, dadurch gekennzeichnet, daß der motorische Hubantrieb über ein auf einer automatischen Kabelrolle aufgewickeltes und ausziehbares Kabel mit der Fahrzeugelektrik verbunden bzw. verbindbar ist.

## Claims

1. Auxiliary device for the unloading of unit loads such as beverage crates or similar from vehicles or on loading ramps, comprising a frame (11) with means (13) for the suspension and/or attachment of the frame to a folded-down vehicle side/tail board or vehicle loading platform edge or a loading ramp, a carriage (14) located on the frame and capable of vertical movement, with a lifting platform (15) arranged on said carriage (14), and further featuring a spring mechanism (17) arranged in said frame (11) which pushes the carriage (14) upwards, and with a mechanism (19) for temporarily locking the carriage in position.

2. Auxiliary device according to Claim 1, characterised in that the frame (11) is provided with wheels or rollers (12) for mobility.

3. Auxiliary device for the unloading of unit loads such as beverage crates or similar from vehicles or a loading ramp, with a frame (11) mounted on the vehicle body capable of movement along at least one side of the loading platform or along the loading ramp, located on which frame (11) is a carriage (14) with a lifting platform (15) capable of vertical movement, and with a spring mechanism (17) arranged in said frame (11) which pushes the carriage (14) upwards, and with a mechanism (19) for the optional temporary locking of the carriage.

4. Auxiliary device according to Claim 3, characterised in that the frame (11) is mounted on the inside of a fold-down side/tail board to allow longitudinal movement.

5. Auxiliary device according to Claim 4, characterised in that the frame is mounted via a carriage which travels longitudinally along the side/tail board, and can be pivoted into a transport position lying parallel to the side/tail board.

6. Auxiliary device according to Claim 3, characterised in that the frame is arranged to allow movement on the outside of a side/tail board which is lowered by vertical movement to an open position.

7. Auxiliary device according to Claim 6, characterised in that the frame is arranged to allow movement along a guide running around at least one load area longitudinal side and the load area rear end of an interconnected and jointly lowerable side and tail board.

8. Auxiliary device for the unloading of unit loads such as beverage crates or similar from vehicles, with a frame (11) which is combined with a transport roller or wheel undercarriage (52), with a device (13) for the suspension from or attachment to a folded-down side/tail board (1) or to a load area edge of the vehicle, and further equipped with a carriage (14) located for vertical movement on the frame, said carriage (14) having a lifting platform (15) which also forms the load platform of the sack barrow or cart, and additionally equipped with a spring mechanism (17) arranged in said frame (11) which pushes the carriage (14) upwards, and with a mechanism (19) for the optional temporary locking of the carriage.

9. Auxiliary device according to one of Claims 1 to 8, characterised in that the spring mechanism exhibits a pneumatic spring and the locking mechanism acts on a component of the pneumatic spring.

10. Auxiliary device according to one of Claims 1 to 9, characterised in that the carriage (14) is connected via a rope or chain (16) and a pulley-block transmission arrangement (18) to the spring mechanism (17).

11. Auxiliary device according to one of Claims 1 to 10, characterised in that the locking mechanism can be actuated by means of a manually or foot-operated lever (19) for the purpose of disengaging the carriage lock.

12. Auxiliary device according to one of Claims 1 to 11, characterised in that the platform (15) is pivot-mounted for folding on the carriage (14).

13. Auxiliary device according to one of Claims 1 to 12, characterised in that, arranged in the frame in addition to the spring mechanism or instead of same, is a motorised lifting drive for operating the carriage.

14. Auxiliary device according to Claim 13, characterised in that the motorised lifting drive is connected or can be connected to the vehicle electrics via a cable wound around and retractable from an automatic cable reel.

## Revendications

1. Dispositif d'assistance pour le déchargement de charges unitaires telles que des caisses de boissons ou charges semblables de véhicules ou de rampes, consistant en un bâti (11) comportant des moyens (13) pour suspendre ou arrêter le bâti à une ridelle de véhicule rabattue ou à un bord de surface de chargement d'un véhicule ou à une rampe de chargement, un chariot (14) guidé de manière à pouvoir être déplacé en verticale sur le bâti, comportant une plate-forme de levage (15) disposée sur ledit chariot, par ailleurs un mécanisme à ressort (17) disposé dans le bâti, qui pousse le chariot (14) vers le haut ainsi qu'un mécanisme (19) pour arrêter temporairement le mouvement du chariot.

2. Dispositif d'assistance selon la revendication 1, caractérisé en ce que le bâti (11) est pourvu de roulettes (12) pour son déplacement.

3. Dispositif d'assistance pour le déchargement de charges unitaires telles que des caisses de boissons ou charges semblables de véhicules ou de rampes, comportant un bâti (11) monté de manière à pouvoir se déplacer au moins le long d'un côté d'une surface de chargement de la carrosserie ou le long de la rampe de chargement, bâti dans lequel un chariot (14) comportant une plate-forme de levage (15) est guidé de manière à pouvoir se déplacer en verticale, comportant par ailleurs un mécanisme à ressort (17) disposé dans le bâti, qui contraint le chariot vers le haut, ainsi qu'un mécanisme (19) pour arrêter temporairement et sélectivement le mouvement du chariot.

4. Dispositif d'assistance selon la revendication 3, caractérisé en ce que le bâti (11) est monté de manière à pouvoir se déplacer dans le sens de la longueur du côté intérieur d'une ridelle rabattue.

5. Dispositif d'assistance selon la revendication 4, caractérisé en ce que le bâti est monté moyennant un chariot pouvant se déplacer le long de la ridelle et peut être basculé dans une position de transport se trouvant parallèlement à la ridelle.

6. Dispositif d'assistance selon la revendication 3, caractérisé en ce que le bâti est disposé de manière à pouvoir être déplacé du côté extérieur d'une ridelle qui peut être abaissée par déplacement vertical dans une position ouverte.

7. Dispositif d'assistance selon la revendication 6, caractérisé en ce que le bâti peut être déplacé le long d'un guidage s'étendant sur au moins un côté longitudinal de la surface de chargement et le côté arrière de la surface de chargement d'une ridelle contiguë et pouvant être abaissée dans son ensemble.

8. Dispositif d'assistance pour le déchargement de charges unitaires telles que des caisses de boissons ou charges semblables de véhicules comportant un bâti (11) combiné à un châssis à roulettes pour le transport (52), comportant un organe (13) pour le suspendre ou l'arrêter à une ridelle (1) rabattue ou à un bord de surface de chargement du véhicule, comportant par ailleurs un chariot (14) guidé de manière à pouvoir se déplacer verticalement sur le bâti ainsi qu'une plate-forme de levage (15) qui forme simultanément la benne de chargement du chariot de transport, comportant en plus un mécanisme à ressort (17) disposé dans le bâti, qui pousse le chariot (14) vers le haut, ainsi qu'un mécanisme (19) pour arrêter temporairement et sélectivement le mouvement du chariot.

9. Dispositif d'assistance selon l'une quelconque des revendications 1 à 8, caractérisé en ce que le dispositif à ressort présente un ressort pneumatique et que le mécanisme d'arrêt agit sur un composant du ressort pneumatique.

10. Dispositif d'assistance selon l'une quelconque des revendications 1 à 9, caractérisé en ce que le chariot (14) est raccordé moyennant un tirant à câble ou à chaîne (16) et un mécanisme de transmission (18) à la manière d'un moufle au mécanisme à ressort (17).

11. Dispositif d'assistance selon l'une quelconque des revendications 1 à 10, caractérisé en ce que le mécanisme d'arrêt peut être actionné au moyen d'un levier à main ou à pied (19) pour desserrer le dispositif d'arrêt du chariot.

12. Dispositif d'assistance selon l'une quelconque des revendications 1 à 11, caractérisé en ce que la plate-forme (15) est disposée sur le chariot (14) de manière à pouvoir être rabattue.

13. Dispositif d'assistance selon l'une quelconque des revendications 1 à 12, caractérisé en ce qu'en plus du dispositif à ressort ou à sa place un entraînement du levage motorisé est disposé dans le bâti pour le déplacement du chariot.

14. Dispositif d'assistance selon la revendication 13, caractérisé en ce que l'entraînement du levage motorisé est raccordé ou peut être raccordé au système électrique du véhicule moyennant un câble pouvant être dévidé d'un rouleau à câble automatique sur lequel il est enroulé.
